Europäisches Patentamt

European Patent Office

Office européen des brevets

(19)

(11) EP 1 725 075 A2

(12) **EUROPÄISCHE PATENTANMELDUNG**

(43) Veröffentlichungstag:
22.11.2006 Patentblatt 2006/47

(51) Int Cl.:
*H05B 3/74* (2006.01)

(21) Anmeldenummer: 06111302.3

(22) Anmeldetag: 17.03.2006

(84) Benannte Vertragsstaaten:
AT BE BG CH CY CZ DE DK EE ES FI FR GB GR
HU IE IS IT LI LT LU LV MC NL PL PT RO SE SI
SK TR
Benannte Erstreckungsstaaten:
AL BA HR MK YU

(30) Priorität: 20.05.2005 DE 102005023448

(71) Anmelder: BSH Bosch und Siemens Hausgeräte
GmbH
81739 München (DE)

(72) Erfinder: Plankl, Manfred
83374 Traunwalchen (DE)

(54) **Messvorrichtung**

(57)  Die Erfindung geht aus von einer Messvorrichtung, insbesondere für ein Gargerät (10), mit einem insbesondere temperaturempfindlichen Sensorwiderstand (12) zum Erzeugen eines Sensorsignals (S) und mit einem Referenzwiderstand (14) zum Erzeugen eines Referenzsignals (R), sowie mit einer Steuer- und Auswerteinheit (16) zum Zu- und Abschalten des Sensorwiderstands (12) und/oder des Referenzwiderstands (14) und zum Vergleichen des Sensorsignals (S) mit dem Referenzsignal (R).

Um eine gattungsgemäße Messvorrichtung bereitzustellen, durch die besonders sicher und ohne Totzeiten eine Plausibilität des Sensorsignals (S) und/oder des Referenzsignals (R) überprüfbar ist, wird vorgeschlagen, dass die Steuer- und Auswerteinheit (16) dazu vorgesehen ist, zum Erzeugen eines Plausibilisierungssignals (P) wenigstens in einer Plausibilisierungsphase das Sensorsignal (S) und das Referenzsignal (R) zu kombinieren.

Fig. 2

EP 1 725 075 A2

**Beschreibung**

Die Erfindung geht aus von einer Messvorrichtung nach dem Oberbegriff des Anspruchs 1.

Es ist eine Messvorrichtung für ein Gargerät mit einem temperaturempfindlichen Sensorwiderstand zum Erzeugen eines Sensorsignals und mit einem Referenzwiderstand zum Erzeugen eines Referenzsignals bekannt. Gattungsgemäße Messvorrichtungen umfassen zudem eine Steuer- und Auswerteinheit zum Zu- und Abschalten des Sensorwiderstands und/oder des Referenzwiderstands und zum Vergleichen des Sensorsignals mit dem Referenzsignal. Die Steuer- und Auswerteinheit erfasst jeweils nur eines der Signale und speichert dessen Wert zum Durchführen des Vergleichs in einem Zwischenspeicher. Durch das Vergleichen des Sensorsignals mit dem Referenzsignal können störende Einflüsse, wie beispielsweise Verstärkungsänderungen, Schwankungen in einer Referenzspannung und Bauteiltoleranzen vorteilhaft eliminiert werden. Zur Plausibilitätsprüfung des Referenzsignals und des Sensorsignals wird von der Steuer- und Auswerteinheit überprüft, ob das Sensorsignal und das Referenzsignal innerhalb eines zulässigen Intervalls liegen. Ist dies nicht der Fall, erkennt die Steuer- und Auswerteinheit einen Fehler. Zudem ist es bekannt, eine Empfindlichkeit des Sensorwiderstands durch ein künstliches Erhitzen desselben zu überprüfen.

Die Aufgabe der Erfindung besteht insbesondere darin, eine gattungsgemäße Messvorrichtung bereitzustellen, durch die besonders sicher und ohne Totzeiten eine Plausibilität des Sensorsignals und/oder des Referenzsignals überprüfbar ist.

Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Messvorrichtung, insbesondere für ein Gargerät, mit einem insbesondere temperaturempfindlichen Sensorwiderstand zum Erzeugen eines Sensorsignals und mit einem Referenzwiderstand zum Erzeugen eines Referenzsignals sowie mit einer Steuer- und Auswerteinheit zum Zu- und Abschalten des Sensorwiderstands und/oder des Referenzwiderstands und zum Vergleichen des Sensorsignals mit dem Referenzsignal.

Es wird vorgeschlagen, dass die Steuer- und Auswerteinheit dazu vorgesehen ist, zum Erzeugen eines Plausibilisierungssignals wenigstens in einer Plausibilisierungsphase das Sensorsignal und das Referenzsignal zu *kombinieren.* Dadurch kann ein weiteres, von dem Sensorsignal und dem Referenzsignal verschiedenes Plausibilisierungssignal ermittelbar sein, das dennoch in definierter Weise von dem Sensorsignal und dem Referenzsignal abhängt. Fehler in einer Signalübertragung können vorteilhaft erkannt werden und dadurch bedingte Messfehler in einer Messung können vermieden werden.

Unter "vorgesehen" soll in diesem Zusammenhang auch "ausgelegt" und "ausgestattet" verstanden werden. Prinzipiell sind gattungsgemäße Messvorrichtungen in allen, dem Fachmann als sinnvoll erscheinenden Anwendungen einsetzbar, die eine Messung erfordern. Wegen der starken Temperaturschwankungen und wegen der mit einer fehlerhaften Messung einhergehenden Gefahrenpotenziale sind jedoch besonders deutliche Verbesserungen bezüglich einer Betriebssicherheit erreichbar, wenn die Messvorrichtung von einem Gargerät umfasst ist und insbesondere in diesem Fall als Temperaturmessvorrichtung ausgebildet ist. Prinzipiell ist jedoch der Einsatz auch im Zusammenhang mit anderen Sensorwiderständen, beispielsweise in der Gasmessung oder Lichtmessung mit Fotowiderständen denkbar.

Die Plausibilisierungsphase kann wiederholt, beispielsweise in einstellbaren Plausibilisierungsintervallen, oder jeweils zu Beginn einer Betriebsphase eines die Messvorrichtung umfassenden Geräts gestartet werden. Es sind auch Ausgestaltungen der Erfindung denkbar, in denen die Plausibilisierungsphase parallel zu einer Messung durch den Vergleich des Sensorsignals mit dem Referenzsignal abläuft. Zwei Signale sollen in diesem Zusammenhang als "zu einem Plausibilisierungssignal kombiniert" gelten, wenn das Plausibilisierungssignal eine beliebige lineare oder nichtlineare Funktion der Signale ist. Dabei ist das Plausibilisierungssignal notwendigerweise von dem beim Vergleich der beiden Signale erzeugten Messsignal verschieden, das beispielsweise eine Differenz oder ein Quotient der beiden Signale sein kann. Zur Plausibilisierung des Messsignals muss sich das Plausibilisierungssignal von dem Messsignal unterscheiden.

In einer Weiterbildung der Erfindung wird vorgeschlagen, dass die Steuer- und Auswerteinheit dazu vorgesehen ist, zum Erzeugen des Plausibilisierungssignals den Sensorwiderstand und den Referenzwiderstand parallel zu schalten. Dadurch kann eine nichtlineare Überlagerung des Sensorsignals und des Referenzsignals erfolgen und eine korrekte Leitfähigkeit aller beteiligten Schaltelemente und Verbindungen ist durch das resultierende Plausibilisierungssignal überprüfbar.

Eine besonders kostengünstige Messvorrichtung ist erreichbar, wenn der Sensorwiderstand und der Referenzwiderstand als ohmsche Widerstände ausgebildet sind. Prinzipiell sind jedoch auch Ausgestaltungen der Erfindung denkbar, in denen ein Sensorbauteil als komplexwertiger Widerstand, beispielsweise als temperaturempfindliches Sensorelement zur kapazitiven Messung, ausgebildet ist.

Umfasst die Messvorrichtung wenigstens ein Schaltelement zum Verbinden des Referenzwiderstands und des Sensorwiderstands mit einer gemeinsamen Stromversorgungsvorrichtung, kann ein durch unterschiedliche Versorgungsspannungen des Sensorwiderstands und des Referenzwiderstands bedingter Messfehler ausgeschlossen werden.

Ein störender Einfluss unterschiedlicher Eingangswiderstände bzw. Eingangscharakteristiken kann eliminiert werden, wenn die Messvorrichtung einen Multiplexer zum Einspeisen des Referenzsignals und/oder des Sensorsignals in einen Eingang der Steuer- und Auswerteinheit umfasst.

Eine besonders schnelle und einfache Plausibilisierung des Multiplexers kann erfolgen, wenn die Steuer- und Auswerteinheit dazu vorgesehen ist, zum Überprüfen des Multiplexers in der Plausibilisierungsphase zumindest zwei Eingänge des Multiplexers kurzzuschließen. Die Ausgangssignale des Multiplexers in den beiden den kurzgeschlossenen Eingängen zugeordneten Schaltstellungen müssten dann bei korrekter Funktion des Multiplexers exakt gleich sein. Eine Ungleichheit der Ausgangssignale deutet auf eine Fehlfunktion des Multiplexers hin, der eine Asymmetrie des Sensorkanals und des Referenzkanals zur Folge hat, die letztlich zu Messfehlern führen kann.

Eine komfortable Weiterverarbeitung der erfassten und/oder ermittelten Signale kann erreicht werden, wenn die Steuer- und Auswerteinheit einen Analog-Digitalwandler umfasst.

Auch kleine Fehler können detektierbar sein, wenn die Steuer- und Auswerteinheit dazu vorgesehen ist, aus dem Sensorsignal und dem Referenzsignal einen Sollwert des Plausibilisierungssignals zu bestimmen. Eine flexibel anpassbare Fehlertoleranz der Messvorrichtung kann erreicht werden, wenn die Steuer- und Auswerteinheit dazu vorgesehen ist, den Sollwert mit dem Plausibilisierungssignal zu vergleichen und bei zu großer Abweichung zwischen dem Sollwert und dem Plausibilisierungssignal ein Warnsignal zu erzeugen. Prinzipiell kann durch den Vergleich auch eine Kenngröße für eine Güte der Messvorrichtung gewonnen werden.

Ferner geht die Erfindung aus von einem Verfahren zum Plausibilisieren von Messsignalen einer Messvorrichtung mit einem insbesondere temperaturempfindlichen Sensorwiderstand zum Erzeugen eines Sensorsignals und mit einem Referenzwiderstand zum Erzeugen eines Referenzsignals.

Es wird vorgeschlagen, dass wenigstens in einer Plausibilisierungsphase das Sensorsignal und das Referenzsignal zum Erzeugen eines Plausibilisierungssignals kombiniert werden. Dadurch können die Messsignale jederzeit und ohne wesentliche Totzeiten durch ein zusätzliches Plausibilisierungssignal überprüft werden.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1     ein Gargerät mit einer Messvorrichtung und

Fig. 2     ein Schaltbild der Messvorrichtung und

Fig. 3     eine schematische Darstellung zu einer Plausibilisierungsphase eines Messprogramms.

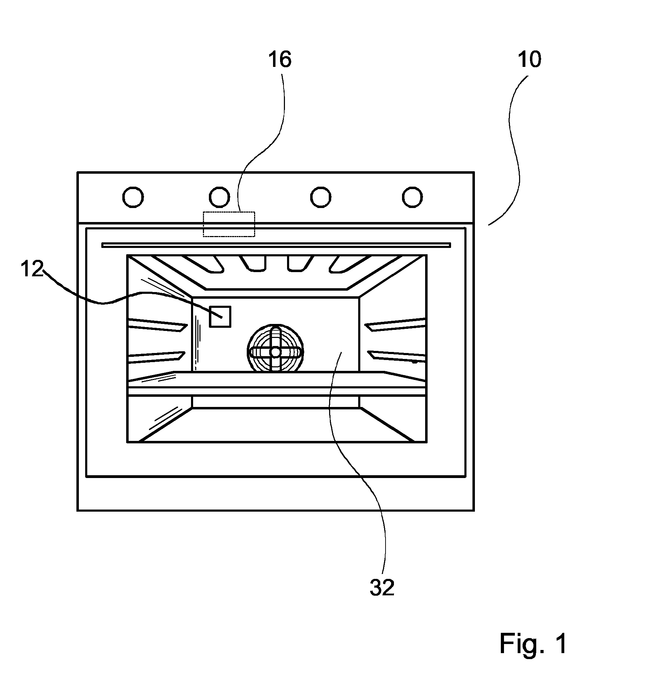

Figur 1 zeigt ein Gargerät 10, und zwar einen Haushaltsbackofen, mit einer Messvorrichtung. Die Messvorrichtung wird von einer Steuer- und Auswerteinheit 16 des Gargeräts 10 zur Regelung einer Temperatur in einem Garraum 32 des Gargeräts 10 genutzt. Im Garraum 32 ist ein als Platin-Temperaturmessfühler ausgebildeter Sensorwiderstand 12 zum Erzeugen eines Sensorsignals S angeordnet. Ein Referenzwiderstand 14, der in Figur 1 nicht zu sehen ist, ist außerhalb einer Wärmeisolation des Garraums 32 angeordnet und dient der Erzeugung eines Referenzsignals R. Zum Ermitteln der Temperatur vergleicht die Steuer- und Auswerteinheit 16 in einem Vergleichsschritt durch das Bilden eines Quotienten aus dem Sensorsignal S mit dem Referenzsignal R das Sensorsignal S mit dem Referenzsignal R. Dadurch werden insbesondere Verstärkungsänderungen und Schwankungen in einer Referenzspannung eliminiert. Der Quotient ist durch die Temperaturabhängigkeit des Sensorsignals S abhängig von der Innentemperatur des Garraums 32.

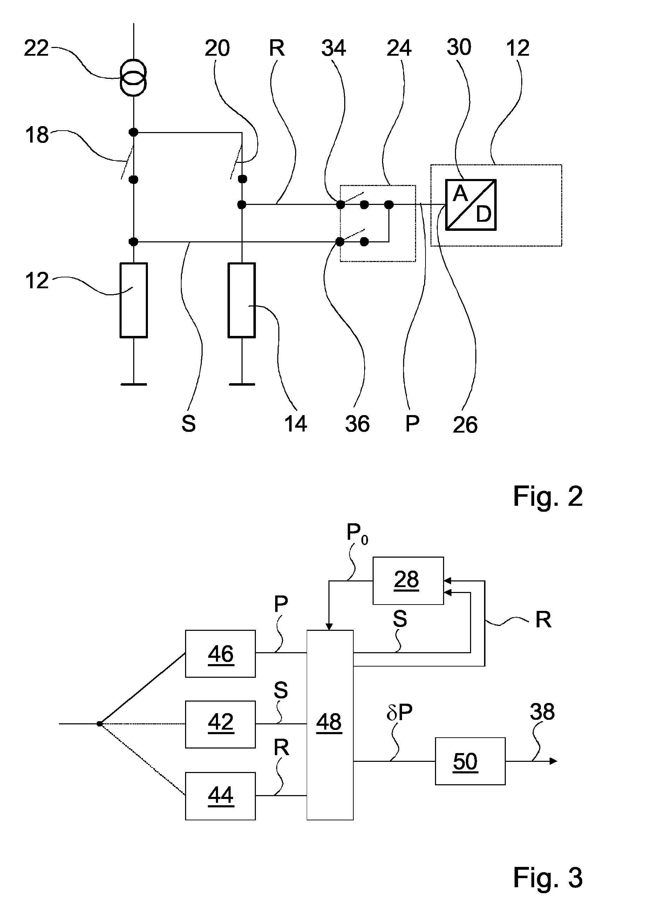

Figur 2 zeigt ein Schaltbild der Messvorrichtung mit dem Sensorwiderstand 12 und dem Referenzwiderstand 14, die von einer gemeinsamen Stromversorgungsvorrichtung 22 gespeist werden und die über zwei als Transistoren ausgebildete Schaltelemente 18, 20 beschaltbar sind. Die Stromversorgungsvorrichtung 22 speist den in Figur 2 dargestellten Stromkreis mit einem konstanten Strom von beispielsweise 1 mA. Der Sensorwiderstand 12 und der Referenzwiderstand 14 liegen gemeinsam auf einer Masse. Die Messgröße zum Bestimmen des Werts des Sensorwiderstands S ist daher eine Spannung. Das Referenzsignal R und das Sensorsignal S laufen über einen Multiplexer 24 in einen Eingang 26 der Steuer- und Auswerteinheit 16, der mit einem Analog-Digitalwandler 30 verbunden ist.

Der Multiplexer 24 hat einen ersten Eingang 34, der mit dem Sensorwiderstand 12 verbunden ist, und hat einen zweiten Eingang 36, der mit dem Referenzwiderstand 14 verbunden ist. Abhängig von einem Steuersignal der Steuer- und Auswerteinheit 16 schaltet der Multiplexer 24 in einer ersten Betriebsart 42 das Sensorsignal S zum Analog-Digitalwandler 30 durch, in einer zweiten Betriebsart 44 schaltet der Multiplexer 24 das Referenzsignal R zum Analog-Digitalwandler 30 durch und in einer dritten Betriebsart 46 schaltet der Multiplexer 24 die am ersten Eingang 34 und am zweiten Eingang 36 anliegenden Signale in einem schnellen Wechsel zum Analog-Digitalwandler 30 durch. Die Steuer- und Auswerteinheit 16 schaltet in der ersten Betriebsart 42 das Schaltelement 18 ein und das Schaltelement 20 aus, in der zweiten Betriebsart 44 das Schaltelement 20 ein und das Schaltelement 18 aus und der dritten Betriebsart 46 beide Schaltelemente 18, 20 ein. In der dritten Betriebsart 46 sind der Sensorwiderstand 12 und der Referenzwiderstand 14 daher parallel geschaltet und die Eingänge 34, 36 des Multiplexers 24 sind kurzgeschlossen.

Während eines Messbetriebs schaltet die Steuer- und Auswerteinheit 16 in Takten zwischen der ersten Betriebsart 42 und der zweiten Betriebsart 44 hin und her und erfasst damit über den Analog-Digitalwandler 30 im Wechsel das Referenzsignal R, das in einem Speicher 28 (Figur 3) zwischengespeichert wird, und das Sensorsignal S. Ist das Sensorsignal S erfasst, bildet die Steuer- und Auswerteinheit 16 aus dem Sensorsignal S und dem zwischengespeicherten Referenzsignal R den Quotienten, der eine fehlerbereinigte Messgröße bildet, und bestimmt aus diesem abhängig von einer Kennlinie des Sensorwiderstands 12 die Innentemperatur des Garraums 32.

In voreingestellten Zeitabständen startet die Steuer- und Auswerteinheit 16 eine Plausibilisierungsphase in der dritten Betriebsart 46. In dem Speicher 28 sind das zuletzt erfasste Sensorsignal S und das zuletzt vor einem Beginn der Plausibilisierungsphase erfasste Referenzsignal R gespeichert. Aus dem zwischengespeicherten Sensorsignal S und dem Referenzsignal R bildet die Steuer- und Auswerteinheit 16 einen Sollwert $P_0$ für ein Plausibilisierungssignal P, das in der dritten Betriebsart 46 am Eingang 26 anliegt. Der Sollwert $P_0$ ist durch

$$P_0 = SR/(S+R)$$

gegeben und entspricht einer für eine Parallelschaltung des Sensorwiderstands 12 und des Referenzwiderstands 14 zu erwartenden Spannung. In einem Vergleichsschritt 48 vergleicht die Steuer- und Auswerteinheit 16 das Plausibilisierungssignal P mit seinem Sollwert $P_0$ durch das Ermitteln einer Abweichung $\delta P = P - P_0$. Funktioniert eines der Schaltelemente 18, 20 nicht korrekt oder ist beispielsweise eine Linearität des Analog-Digitalwandlers 30 nicht perfekt, so weicht das Plausibilisierungssignal P um die Abweichung $\delta P = P - P_0$ von dem Sollwert $P_0$ ab. Die Steuer- und Auswerteinheit 16 vergleicht die Abweichung $\delta P$ in einem weiteren Vergleichsschritt 50 mit einer in dem Speicher 28 gespeicherten Toleranz. Ist die Abweichung $\delta P$ größer als die Toleranz, so erzeugt die Steuer- und Auswerteinheit 16 ein Warnsignal 38 bzw. eine Fehlermeldung, durch welches das Gargerät 10 abgeschaltet und bis zum Eintreffen eines Kundendienstes deaktiviert wird.

Ferner überprüft die Steuer- und Auswerteinheit 16 in der Plausibilisierungsphase durch den schnellen Wechsel der Schaltstellung des Multiplexers 24 die korrekte Funktion des Multiplexers 24, dessen Eingänge 34, 36 durch die geschlossenen Schaltelemente 18, 20 kurzgeschlossen sind, so dass in beiden Schaltstellungen des Multiplexers 24 im Fall einer korrekten Funktion des Multiplexers 24 an dessen Ausgang die gleiche Spannung anliegen sollte. Ein weiterer Grund für verschiedene Ausgangsspannungen des Multiplexers 24 in den beiden Schaltstellungen könnte in Kontaktwiderständen der beiden Schaltelemente 18, 20 liegen. Erkennt die Steuer- und Auswerteinheit 16 eine Abweichung zwischen den beiden Schaltstellungen des Multiplexers 24, so erzeugt die Steuer- und Auswerteinheit 16 eine Fehlermeldung.

Bezugszeichen

| 10 | Gargerät |
|----|----------|
| 12 | Sensorwiderstand |
| 14 | Referenzwiderstand |
| 16 | Steuer- und Auswerteinheit |
| 18 | Schaltelement |
| 20 | Schaltelement |
| 22 | Stromversorgungsvorrichtung |
| 24 | Multiplexer |
| 26 | Eingang |
| 28 | Speicher |
| 30 | Analog-Digitalwandler |
| 32 | Garraum |
| 34 | Eingang |
| 36 | Eingang |
| 38 | Warnsignal |
| 42 | Betriebsart |
| 44 | Betriebsart |
| 46 | Betriebsart |
| 48 | Vergleichsschritt |
| 50 | Vergleichsschritt |
| S | Sensorsignal |
| R | Referenzsignal |
| P | Plausibilisierungssignal |
| $P_0$ | Sollwert |
| $\delta P$ | Abweichung |

Patentansprüche

1. Messvorrichtung, insbesondere für ein Gargerät (10), mit einem insbesondere temperaturempfindlichen Sensorwiderstand (12) zum Erzeugen eines Sensorsignals (S) und mit einem Referenzwiderstand (14) zum Erzeugen eines Referenzsignals (R), sowie mit einer Steuer- und Auswerteinheit (16) zum Zu- und Abschalten des Sensorwiderstands (12) und/oder des Referenzwiderstands (14) und zum Vergleichen des Sensorsignals (S) mit dem Referenzsignal (R), **dadurch gekennzeichnet, dass** die Steuer- und Auswerteinheit (16) dazu vorgesehen ist, zum Erzeugen eines Plausibilisierungssignals (P) wenigstens in einer Plausibilisierungsphase das Sensorsignal (S) und das Referenzsignal (R) zu kombinieren.

**2.** Messvorrichtung nach Anspruch 1, **dadurch gekennzeichnet, dass** die Steuer- und Auswerteinheit (16) dazu vorgesehen ist, zum Erzeugen des Plausibilisierungssignals (P) den Sensorwiderstand (12) und den Referenzwiderstand (14) parallel zu schalten.

**3.** Messvorrichtung nach einem der vorhergehenden Ansprüche, **gekennzeichnet durch** wenigstens ein Schaltelement (18, 20) zum Verbinden des Referenzwiderstands (14) und des Sensorwiderstands (12) mit einer gemeinsamen Stromversorgungsvorrichtung (22).

**4.** Messvorrichtung nach einem der vorhergehenden Ansprüche, **gekennzeichnet durch** zumindest einen Multiplexer (24) zum Einspeisen des Referenzsignals (R) und/oder des Sensorsignals (S) in einen Eingang (26) der Steuer- und Auswerteinheit (16).

**5.** Messvorrichtung nach Anspruch 4, **dadurch gekennzeichnet, dass** die Steuer- und Auswerteinheit (16) dazu vorgesehen ist, zum Überprüfen des Multiplexers (24) in der Plausibilisierungsphase zumindest zwei Eingänge 34, 36 des Multiplexers (24) kurzzuschließen.

**6.** Messvorrichtung nach einem der vorhergehenden Ansprüche, **dadurch gekennzeichnet, dass** die Steuer- und Auswerteinheit (16) einen Analog-Digitalwandler (30) umfasst.

**7.** Messvorrichtung nach einem der vorhergehenden Ansprüche, **dadurch gekennzeichnet, dass** die Steuer- und Auswerteinheit (16) dazu vorgesehen ist, aus dem Sensorsignal (S) und dem Referenzsignal (R) einen Sollwert ($P_0$) des Plausibilisierungssignals (P) zu bestimmen.

**8.** Messvorrichtung nach Anspruch 7, **dadurch gekennzeichnet, dass** die Steuer- und Auswerteinheit (16) dazu vorgesehen ist, den Sollwert ($P_0$) mit dem Plausibilisierungssignal (P) zu vergleichen und bei zu großer Abweichung ($\delta P$) zwischen Sollwert ($P_0$) und dem Plausibilisierungssignal (P) ein Warnsignal (38) zu erzeugen.

**9.** Gargerät mit einer Messvorrichtung nach einem der vorhergehenden Ansprüche.

**10.** Verfahren zum Plausibilisieren eines Messsignals einer Messvorrichtung mit einem insbesondere temperaturempfindlichen Sensorwiderstand (12) zum Erzeugen eines Sensorsignals (S) und mit einem Referenzwiderstand (14) zum Erzeugen eines Referenzsignals (R), **dadurch gekennzeichnet, dass** wenigstens in einer Plausibilisierungsphase das Sensorsignal (S) und das Referenzsignal (R) zum Erzeugen eines Plausibilisierungssignals (P) kombiniert werden.

16    10

12

32

Fig. 1

Fig. 2

Fig. 3